# EUROPÄISCHE PATENTSCHRIFT

(11) **EP 3 250 844 B1**
(45) Veröffentlichungstag und Bekanntmachung des Hinweises auf die Patenterteilung: **04.03.2020**
(21) Anmeldenummer: 15807801.4
(22) Anmeldetag: 01.12.2015
(51) Int. Cl.: F16H 57/029, F16J 15/00, F16J 15/16, F16J 15/32

(54) **DICHTUNGSANORDNUNG FÜR EIN GETRIEBE, INSBESONDERE FÜR DIE ABTRIEBSWELLE EINES GETRIEBES, UND GETRIEBE MIT DICHTUNGSANORDNUNG**
SEAL ARRANGEMENT FOR A TRANSMISSION, IN PARTICULAR FOR THE OUTPUT SHAFT OF A TRANSMISSION, AND TRANSMISSION COMPRISING A SEAL ARRANGEMENT
SYSTÈME D'ÉTANCHÉITÉ DESTINÉ À UNE TRANSMISSION, EN PARTICULIER À L'ARBRE DE SORTIE D'UNE TRANSMISSION, ET TRANSMISSION MUNIE D'UN SYSTÈME D'ÉTANCHÉITÉ

(30) Priorität: 26.01.2015 DE 102015000774; 11.03.2015 DE 102015003048
(43) Veröffentlichungstag der Anmeldung: 06.12.2017
(73) Patentinhaber: SEW-EURODRIVE GmbH & Co. KG, 76646 Bruchsal (DE)
(72) Erfinder: REINEBERG, Martin, 76448 Dummersheim (DE); BARTON, Peter, 75015 Bretten (DE)
(86) Internationale Anmeldenummer: PCT/EP2015/002408
(87) Internationale Veröffentlichungsnummer: WO 2016/119802

(56) Entgegenhaltungen:
- EP-A2- 1 039 161
- DE-A1-102012 000 666
- DE-A1-102013 012 916
- DE-U1- 20 017 157
- DE-U1- 20 210 545

## Beschreibung

Die Erfindung betrifft eine Dichtungsanordnung für ein Getriebe, insbesondere für die Abtriebswelle eines Getriebes, und ein Getriebe mit Dichtungsanordnung.

Es ist allgemein bekannt, dass zur Abdichtung einer Welle ein Wellendichtring einsetzbar ist.

**Aus der** DE 202 10 545 U1 **ist ein Wellendichtring bekannt.**

**Aus der** DE 200 17 157 U1 **ist eine Dichtungsanordung mit Wellendichtringen bekannt.**

**Aus der** DE 10 2012 000 666 A1 **ist ein Getriebe bekannt.**

**Aus der** DE 10 2013 012 916 A1 **ist eine Dichtungsanordnung für die Abdichtung einer Welle bekannt.**

**Aus der** EP 1 039 161 A2 **ist als nächstliegender Stand der Technik eine Wellenabdichtung bekannt.**

Der Erfindung liegt daher die Aufgabe zugrunde, eine Dichtungsanordnung für ein Getriebe, insbesondere für die Abtriebswelle eines Getriebes, weiterzubilden, wobei eine einfache Herstellung und Wartung ausführbar sein soll.

Erfindungsgemäß wird die Aufgabe bei der Dichtungsanordnung für ein Getriebe, insbesondere für die Abtriebswelle eines Getriebes, nach den in Anspruch 1 und bei dem Getriebe mit Dichtungsanordnung nach den in Anspruch 10 angegebenen Merkmalen gelöst.

Von Vorteil ist dabei, dass eine einfache Austauschbarkeit der Dichtungsanordnung erreichbar ist, da nur das Flanschteil vom Gehäuse des Getriebes zu entfernen ist und durch eine neue Dichtungsanordnung zu ersetzen ist. Die Vorkomplettierung der Anordnung ermöglicht einen besonders schnellen Austausch beziehungsweise eine besonders schnelle und einfache Herstellung.

Mit dem Erfindungsgegenstand ist auch ein Austauschen eines vorhandenen einfachen Getriebedeckelteils gegen die erfindungsgemäße Abdichtung ermöglicht. Somit ist eine zusätzliche Druckluftabdichtung in einfacher Weise ausführbar. Der Druckunterschied, welchem eine vorgeschaltete Dichtungsanordnung ausgesetzt ist, ist reduzierbar mittels der zusätzlichen Druckluftabdichtung.

Die Vorkomplettierung wird erreicht durch das Schraubverbinden des Anschlussflansches mit dem Flanschteil, wobei beim Schraubverbinden die im Flanschteil aufgenommenen, axial hintereinander angeordneten Teile, wie Distanzring, erster und zweiter Wellendichtring in axialer Richtung hintereinander angeordnet werden und geschützt, insbesondere gehäusebildend, umgeben sind vom Anschlussflansch und Flanschteil.

Auf diese Weise ist die Vorkomplettierung in einfacher Weise ausgeführt. Zusätzlich ist auch eine Laufuchse in die Wellendichtringe einführbar, so dass die Laufbuchse mittransportierbar ist und die Dichtlippen der Wellendichtringe die Laufbuchse schon berühren und halten. Somit muss dann zum Einsetzen ins Getriebe die Laufbuchse nur noch schraubverbunden werden mit der Welle und das Flanschteil mit einem Deckelteil oder Gehäuseteil des Getriebes.

Bei einer vorteilhaften Ausgestaltung begrenzen Flanschteil und Anschlussflansch eine Ringnut, deren erste Seitenwand den ersten Wellendichtring berührt und deren gegenüberliegende Seitenwand den zweiten Wellendichtring berührt. Von Vorteil ist dabei, dass mittels der Ringnut ein Aufnahmebereich für die Wellendichtringe vorgesehen ist. Dabei ist die Ringnut nach radial innen geöffnet. In axialer Richtung, also in Richtung der Wellenachse der Welle, insbesondere Hohlwelle, ist die Ringnut durch das Flanschteil und in der entgegengesetzten Richtung durch den Anschlussflansch begrenzt. Nach radial außen ist die Ringnut durch das Flanschteil begrenzt. Die Ringnut erstreckt sich in Umfangsrichtung.

Von Vorteil ist, dass die Laufbuchse eingeklemmt und somit vorkomplettiert in der Dichtungsanordung angeordnet ist. Somit muss nur die Laufbuchse schraubverbunden werden mit der Welle und das Flanschteil mit dem Gehäuse des Getriebes, insbesondere mit dem Deckelteil.

Bei einer vorteilhaften Ausgestaltung ist ein Dichtelement, insbesondere O-Ring, zwischen Flanschteil und Anschlussflansch angeordnet zur Abdichtung der Verbindung des Flanschteils mit dem Anschlussflansch. Von Vorteil ist dabei, dass eine hohe Dichtigkeit erreichbar ist.

Bei einer vorteilhaften Ausgestaltung ist der Distanzring radial weniger ausgedehnt als der erste und/oder als der zweite Wellendichtring, wobei der Distanzring von der Laufbuchse und der Welle beabstandet ist, insbesondere so dass eine Fettkammer zwischen dem ersten und dem zweiten Wellendichtring gebildet ist. Von Vorteil ist dabei, dass durch die radiale Rücknahme ein Raumbereich als Fettkammer verwendbar ist.

Von Vorteil ist, dass die vorkomplettierte Einheit in einfacher Weise mit dem Gehäuse des Getriebes verbindbar ist.

Bei einer vorteilhaften Ausgestaltung sind die Laufbuchse mit der Welle mittels axial gerichteter Schrauben verbunden,
insbesondere wobei die Schrauben in jeweilige in der am axialen Ende der Welle angeordnete Stirnseite der Welle vorgesehene Gewindebohrungen eingeschraubt sind. Von Vorteil ist dabei, dass eine einfach herstellbare Verbindung verwendbar ist.

Bei einer vorteilhaften Ausgestaltung weist die Welle, welche als eine Hohlwelle ausgeführt ist, und der Anschlussflansch eine Ringnut auf, insbesondere deren Ringachse koaxial zur Achse der Welle, insbesondere also zur Wellenachse, ausgerichtet ist,
wobei ein axialer Endbereich der Welle und/oder der Laufbuchse in die Ringnut zumindest teilweise hineinragt oder hineinragen. Von Vorteil ist dabei, dass ein Raumbereich für Druckluft in einfacher Weise hergestellt ist.

Von Vorteil ist, dass eine Vorkomplettierung in einfacher Weise erreichbar ist.

Wichtige Merkmale bei dem Getriebe mit Dichtungsanordnung sind, dass die Welle die abtreibende Welle des Getriebes ist.

Von Vorteil ist dabei, dass eine kaskadierte Abdichtung in einfacher Weise mit einer zusätzlichen Druckluftabdichtung abdichtbar ist. Somit ist eine kaskadierte Dichtungsanordnung weiter verbesserbar und eine höhere Schutzart für das Getriebe erreichbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

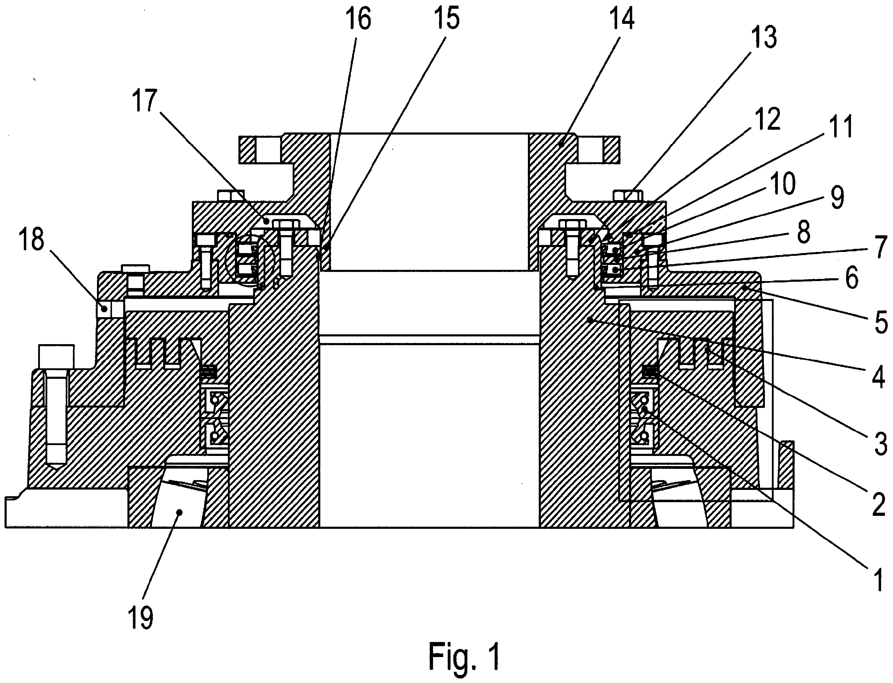

In der Figur 1 ist ein Ausschnitt eines erfindungsgemäßen Getriebes gezeigt.

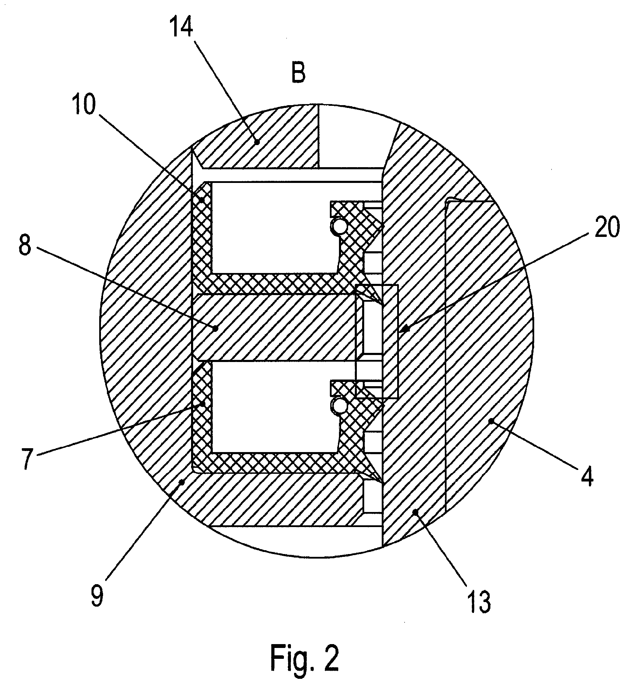

In der Figur 2 ist ein vergrößerter Ausschnitt aus Figur 1 gezeigt.

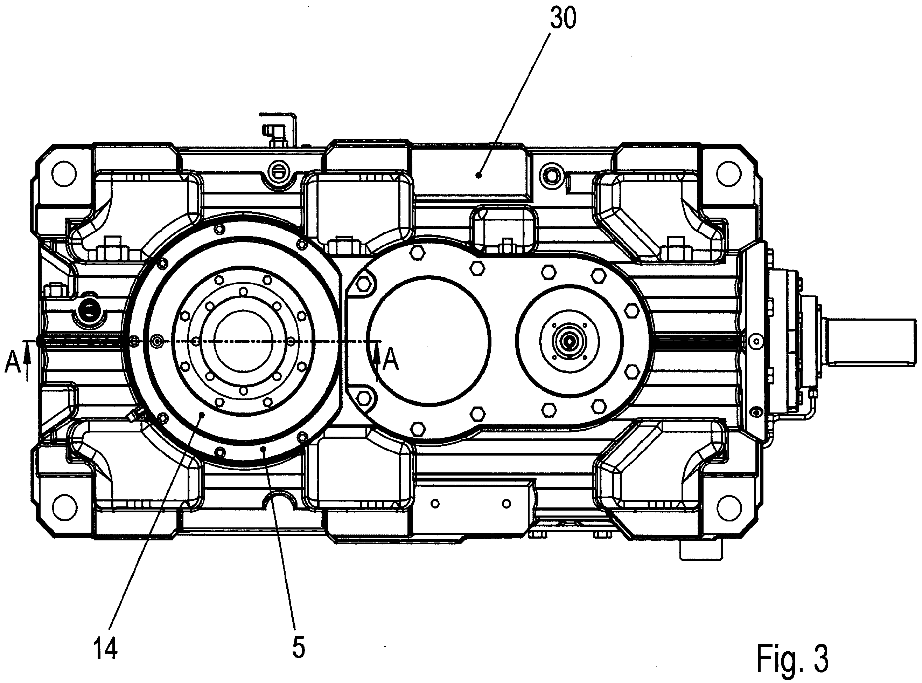

In der Figur 3 ist das Getriebe in Seitenansicht gezeigt.

Wie in den Figuren dargestellt, weist das Getriebe 30 eine Welle 4 auf, die als Abtriebswelle ausgeführt ist. Die Welle 4 ist als Hohlwelle vorgesehen.

Die Welle 4 ist im Gehäuse des Getriebes 30 über Lager 19 gelagert, welche im Ausführungsbeispiel als Schräglager ausgeführt sind.

Einer der axialen Endbereiche der Welle 4 ragt aus dem Gehäuse heraus und ist daher mittels eines am Gehäuse befestigten Deckelteils 5 und einem am Deckelteil 5 befestigten 14 Anschlussflansch abgedeckt.

Als Befestigungsart ist die Schraubverbindung wählbar.

Axial außerhalb des zwischen den Lagern 19 überdeckten axialen Bereichs ist eine kaskadierte Dichtungsanordnung vorgesehen, welche die Welle 4 gegen das Gehäuse abdichtet und somit das mit Öl teilweise oder ganz befüllte Getriebeinnere von der äußeren Umgebung abdichtet. Hierbei ist von innen nach außen zunächst eine Wellendichtring-Dichtungsanordnung 1, eine Lamellendichtung 2, eine Labyrinth-Dichtung 3 vorgesehen. Dabei ist die Wellendichtring-Dichtungsanordnung 1 im Gehäuse des Getriebes 30 aufgenommen und läuft auf der Welle 4.

Am axialen Ende der Welle 4 ist eine Laufbuchse 13 mit der Welle 4 verbunden, insbesondere schraubverbunden mittels in axial gerichtete, in der Stirnseite der Welle 4 angeordnete Gewindebohrungen eingeschraubten Schrauben.

Die Laufbuchse 13 bietet eine Lauffläche für einen ersten Wellendichtring 7 und einen zweiten Wellendichtring 10 an.

Die Wellendichtringe 7 und 10 sind dabei axial voneinander beabstandet mittels des Distanzrings 8 und aufgenommen in einem Flanschteil 9.

Der erste Wellendichtring 7 ist gegen eine als nach radial innen hervorragende Kragen-artige Stufe im Flanschteil 9 in axialer Richtung angestellt. Auf der zur Stufe abgewandten Seite des ersten Wellendichtrings 7 ist der Distanzring 8 angeordnet und auf dessen vom ersten Wellendichtring 7 abgewandten Seite der zweite Wellendichtring 10. Axial von der Stufe abgewandt wird die Anordnung, umfassend den ersten und zweiten Wellendichtring (7, 10) sowie den Distanzring 8, begrenzt durch einen mit dem Flanschteil 9 verbundenen, insbesondere schraubverbundenen, Anschlussflansch 14.

Der Anschlussflansch 14 weist an seiner der Welle 4 zugewandten Seite eine ringförmige Vertiefung auf, in welche das axiale Ende der als Hohlwelle ausgeführten Welle 4 zumindest teilweise hineinragt. Der in der ringförmigen Vertiefung frei bleibende Raumbereich 17 ist begrenzt durch den Anschlussflansch14 und die Welle 4 samt Laufbuchse 13, welche mittels des ersten und zweiten Wellendichtrings (7, 10) gegen den Anschlussflansch 14 nach radial außen abgedichtet sind. Nur ein kleiner Spalt zwischen Anschlussflansch 14 und Welle 4 führt vom Raumbereich 17 radial innen zum lichten Innenraumbereich der als Hohlwelle ausgeführten Welle 4.

Der Anschlussflansch 14 weist eine in den Figuren nicht gezeigte durchgehende Bohrung auf, die von außen zum Raumbereich 17 führt, so dass Druckluft von außen in den Raumbereich 17 führbar ist. Auf diese Weise ist die Dichtheit der gesamten Abdichtung der Welle 4 zum Gehäuse hin verbessert.

Eine durch das Deckelteil 5 durchgehende Bohrung führt im Falle von Überdruck Luft aus dem Raumbereich zwischen der kaskadierten Dichtungsanordnung und der aus dem ersten und zweiten Wellendichtring (7, 10) gebildeten Dichtungsanordnung zwischen Laufbuchse 13 und Flanschteil 9. Somit ist das Getriebeinnere vor Überdruck schützbar. Hierzu wird in der Bohrung 18 vorzugsweise ein Überdruckventil oder ein Entlüftungsmittel angeordnet.

Zwischen Laufbuchse 13 und Welle 4 ist ein als O-Ring ausgeführtes Dichtelement 6 angeordnet. Auf diese Weise ist die Laufbuchse 13 zur Welle 4 hin abgedichtet.

Der Raumbereich zwischen der kaskadierten Dichtungsanordnung und der aus dem ersten und zweiten Wellendichtring (7, 10) gebildeten Dichtungsanordnung wird vom Deckelteil 5, dem Flanschteil 9, der Laufbuchse 13, der Welle 4 und von dem die kaskadierte Dichtungsanordnung, insbesondere die Labyrinth-Dichtung 3, aufnehmenden Gehäuseteil.

Ein zweites als O-Ring ausgeführtes Dichtelement 11 ist zwischen Flanschteil 9 und Deckelteil 5 angeordnet zur dichten Verbindung des Flanschteils 9 mit dem Deckelteil 5.

Dabei drückt das Flanschteil 9 auf den zweiten Wellendichtring 10, welcher somit auf den Distanzring 8 gedrückt wird, so dass dieser wiederum auf den ersten Wellendichtring 7 gedrückt wird, der somit auf den Anschlussflansch 14 drückt. Auf diese Weise ist diese Dichtungsanordnung vorkomplettiert herstellbar. Dies bedeutet, dass in einem separaten Herstellungsschritt der Distanzring 8, der erste und zweite Wellendichtring (7, 10), das Flanschteil 9 und der Anschlussflansch 14 zusammengebaut werden. Durch das beim Schraubverbinden bewirkte Andrücken wird diese Dichtungsanordnung zusammengehalten.

Zum Einbau ins Getriebe muss nur die Laufbuchse 13 mit der Welle 4 schraubverbunden werden und danach diese Dichtungsanordung am Gehäuse, insbesondere am Deckelteil 5, des Getriebes befestigt, insbesondere schraubverbunden, werden.

Alternativ ist auch das Deckelteil 5 bei der Vorkomplettierung schon mit dieser Dichtungsanordnung schraubverbunden und wird dann als derart vorkomplettierte Einheit transportiert und ins Getriebe eingebaut, indem das Deckelteil 5 mit dem einem weiteren Gehäuseteil des Gehäuses des Getriebes verbunden wird.

Die Schrauben, welche zur Verbindung des Deckelteils 5 mit dem Flanschteil 9 eingesetzt sind, sind durch den Anschlussflansch 14 verdeckt angeordnet. Denn beim Aufsetzen und Schraubverbinden des Anschlussflansches 14 werden die in einer Vertiefung des Flanschteils 9 versenkt angeordneten Schraubenköpfe übergedeckt.

Ebenso ragen die Schraubenköpfe der die Laufbuchse 13 mit der Welle 4 verbindenden schrauben in den oben genannten, mit Druckluft beaufschlagen Raumbereich 17 hinein, der zumindest auch vom Anschlussflansch 14 begrenzt ist.

Eine an der Laufbuchse 13 ausgeführt Fase 12 erleichtert das Einfädeln der Laufbuchse in den ersten Wellendichtring 7.

Der am Anschlussflansch 14 ausgeführte Kragen 15 ist derart dimensioniert, dass der Luftspalt, also Ringspalt 16, zwischen dem Kragen 15 und der Welle 4 derart ist, dass ein vorgesehener Druckunterschied zwischen dem Druck im Raumbereich 17 und dem Druck in der äußeren Umgebung erreicht wird.

Der Distanzring 8 ist radial weniger ausgedehnt ausgeführt als der erste Wellendichtring 7 und als der zweite Wellendichtring 10. Auf diese Weise ist in axialer Richtung eine Fettkammer 20 erzeugt, die bei Herstellung der Dichtungsanordnung mit Fett befüllbar ist.

Infolge der Vorkomplettierung ist ein Befüllen der Fettkammer 20 mit Fett schon bei Herstellung der Dichtungsanordnung, also vor dem Einbau ins Getriebe 30, ermöglicht.

Die Fettkammer ist begrenzt durch die Laufbuchse 13, den ersten Wellendichtring 7, den zweiten Wellendichtring 10 und den Distanzring 8. Somit ist Fett auch in dem vom ersten Wellendichtring 7 umschlossenen Bereich einfüllbar.

### Bezugszeichenliste

1 Wellendichtring-Dichtungsanordnung
2 Lamellendichtung
3 Labyrinth-Dichtung
4 Welle, insbesondere Abtriebswelle, insbesondere Hohlwelle
5 Deckelteil
6 Dichtelement, insbesondere O-Ring
7 erster Wellendichtring
8 Distanzring
9 Flanschteil
10 zweiter Wellendichtring
11 Dichtelement, insbesondere O-Ring
12 Fase an Laufbuchse 13
13 Laufbuchse
14 Anschlussflansch
15 Kragen
16 Ringspalt
17 Raumbereich
18 Bohrung für Verschlussschraube
19 Lager
20 Fettkammer
30 Getriebe

## Patentansprüche

1. Dichtungsanordnung (1)für ein Getriebe,
**wobei** ein Distanzring (8) zwischen einem ersten und einem zweiten Wellendichtring (7, 10) angeordnet ist,
wobei ein Flanschteil (9) mit **einem** Anschlussflansch (14) verbunden ist,
wobei **der** Anschlussflansch (14) den zweiten Wellendichtring (10) auf den Distanzring (8) drückt,
der Distanzring (8) auf den ersten Wellendichtring (7) drückt, so dass der erste Wellendichtring (7) gegen **das** Flanschteil (9) angestellt ist,
**wobei die Lauffläche des ersten Wellendichtrings (7) und die Lauffläche des zweiten Wellendichtrings (10) auf einer Laufbuchse (13) angeordnet sind, die mit einer Welle (4) schraubverbunden ist,** wobei der Anschlussflansch (14) derart an das Flanschteil (9) angeschraubt ist, dass der erste und zweite Wellendichtring (7,10) zwischen Anschlussflansch (14) und Flanschteil (9) angeordnet sind und der Distanzring (8) zwischen dem ersten und zweiten Wellendichtring (7,10),
**dadurch gekennzeichnet, dass**
**der von dem Flanschteil (9), dem Anschlussflansch (14), dem zweiten Wellendichtring (10) sowie der Laufbuchse (13) und/oder der Welle (4) begrenzte Raumbereich (17) mit Druckluft beaufschlagt ist,**
**wobei die Druckluftzuführung durch den Anschlussflansch (14) ausgeführt ist,**
**wobei das Flanschteil (9) mit einem Deckelteil (5) des Getriebes, verbunden ist,**
**wobei die Schraubenköpfe der zur Verbindung eingesetzten Schrauben vom Anschlussflansch (14) überdeckt und/oder abgedeckt sind,**
**wobei zwischen Welle (4) und Deckelteil (5) eine kaskadierte Dichtungsanordnung (1) angeordnet ist, welche die Welle (4) gegen das Gehäuse abdichtet und somit das mit Öl teilweise oder ganz befüllte Getriebeinnere von der äußeren Umgebung abdichtet**
**wobei die kaskadierte Dichtungsanordnung (1) eine Wellendichtring-Dichtungsanordnung (1), eine Lamellendichtung (2) und eine Labyrinth-Dichtung (3) aufweist.**

2. Dichtungsanordnung (1) nach Anspruch 1,
**dadurch gekennzeichnet, dass**
Flanschteil (9) und Anschlussflansch (14) eine Ringnut begrenzen, deren erste Seitenwand den ersten Wellendichtring (7) berührt und deren gegenüberliegende Seitenwand den zweiten Wellendichtring (10) berührt.

3. Dichtungsanordnung (1) nach mindestens einem der vorangegangenen Ansprüche,
**dadurch gekennzeichnet, dass**
**das Flanschteil (9), der Anschlussflansch (14), der erste Wellendichtring (7), der Distanzring (8) und der zweite Wellendichtring (10) als eine vorkomplettierte, Einheit ausgebildet sind.**

4. Dichtungsanordnung (1) nach Anspruch 1, 2 oder 3,
**dadurch gekennzeichnet, dass**
**ein Dichtelement (6), zwischen Flanschteil (9) und Anschlussflansch (14) angeordnet ist zur Abdichtung der Verbindung des Flanschteils (9) mit dem Anschlussflansch (14).**

5. Dichtungsanordnung (1) nach mindestens einem der vorangegangenen Ansprüche,
**dadurch gekennzeichnet, dass**
der Distanzring (8) radial weniger ausgedehnt ist als der erste und/oder als der zweite Wellendichtring (10) ist, wobei der Distanzring (8) von der Laufbuchse (13) und der Welle (4) beabstandet ist, so dass eine Fettkammer (20) zwischen dem ersten und dem zweiten Wellendichtring (10) gebildet ist.

6. Dichtungsanordnung (1) nach mindestens einem der vorangegangenen Ansprüche,
**dadurch gekennzeichnet, dass**

7. Dichtungsanordnung (1) nach mindestens einem der vorangegangenen Ansprüche,
**dadurch gekennzeichnet, dass**
die Laufbuchse (13) mit der Welle (4) mittels axial gerichteter Schrauben verbunden sind, wobei die Schrauben in jeweilige in der am axialen Ende der Welle (4) angeordnete Stirnseite der Welle (4) vorgesehene Gewindebohrungen eingeschraubt sind.

8. Dichtungsanordnung (1) nach mindestens einem der vorangegangenen Ansprüche,
**dadurch gekennzeichnet, dass**
die Welle (4) eine Hohlwelle ist und der Anschlussflansch (14) eine Ringnut aufweist; deren Ringachse koaxial zur Achse der Welle (4), ausgerichtet ist,
wobei ein axialer Endbereich der Welle (4) und/oder der Laufbuchse (13) in die Ringnut zumindest teilweise hineinragt oder hineinragen.

9. Dichtungsanordnung (1) nach mindestens einem der vorangegangenen Ansprüche,
**dadurch gekennzeichnet, dass**
**die Dichtungsanordnung (1) im Gehäuse des Getriebes (30) aufgenommen ist.**

10. Getriebe mit Dichtungsanordnung (1) nach mindestens einem der vorangegangenen Ansprüche,
**dadurch gekennzeichnet, dass**
die Welle (4) die abtreibende Welle (4) des Getriebes ist.

## Claims

1. A seal arrangement (1) for a gear mechanism,
wherein a spacer ring (8) is arranged between a first and a second shaft sealing ring (7, 10),
wherein a flange part (9) is connected to a connection flange (14),
wherein the connection flange (14) presses the second shaft sealing ring (10) onto the spacer ring (8),
the spacer ring (8) presses onto the first shaft sealing ring (7), so that the first shaft sealing ring (7) is adjusted against the flange part (9),
wherein the running surface of the first shaft sealing ring (7) and the running surface of the second shaft sealing ring (10) are arranged on a bearing bush (13) which is screw-connected to a shaft (4), wherein the connection flange (14) is screwed onto the flange part (9) such that the first and second shaft sealing ring (7, 10) are arranged between the connection flange (14) and flange part (9), and the spacer ring (8) between the first and second shaft sealing ring (7, 10),
**characterised in that**
the spatial region (17) delimited by the flange part (9), the connection flange (14), the second shaft sealing ring (10) and the bearing bush (13) and/or the shaft (4) is acted upon with compressed air,
wherein the compressed air is supplied through the connection flange (14),
wherein the flange part (9) is connected to a cover part (5) of the gear mechanism,
wherein the screw heads of the screws used for connection are overlapped and/or covered by the connection flange (14),
wherein a cascading seal arrangement (1) is arranged between the shaft (4) and cover part (5), which arrangement seals off the shaft (4) from the housing and thus seals off the interior of the gear mechanism which is filled partially or entirely with oil from the external environment,
wherein the cascading seal arrangement (1) has a shaft-sealing-ring seal arrangement (1), a lamellar seal (2) and a labyrinth seal (3).

2. A seal arrangement (1) according to Claim 1,
**characterised in that**
the flange part (9) and connection flange (14) delimit an annular groove, the first side wall of which contacts the first shaft sealing ring (7) and the opposing side wall of which contacts the second shaft sealing ring (10).

3. A seal arrangement (1) according to at least one of the preceding claims,
**characterised in that**
the flange part (9), the connection flange (14), the first shaft sealing ring (7), the spacer ring (8) and the second shaft sealing ring (10) are designed as a precompleted unit.

4. A seal arrangement (1) according to Claim 1, 2 or 3,
**characterised in that**
a sealing element (6) is arranged between the flange part (9) and connection flange (14) for sealing off the connection of the flange part (9) to the connection flange (14).

5. A seal arrangement (1) according to at least one of the preceding claims,
**characterised in that**
the spacer ring (8) is less extended radially than the first and/or than the second shaft sealing ring (10), the spacer ring (8) being spaced apart from the bearing bush (13) and the shaft (4), so that a grease chamber (20) is formed between the first and the second shaft sealing ring (10).

6. A seal arrangement (1) according to at least one of the preceding claims,
**characterised in that**

7. A seal arrangement (1) according to at least one of the preceding claims,
**characterised in that**
the bearing bush (13) are connected [sic] to the shaft (4) by means of axially directed screws,
the screws being screwed into respective threaded bores provided **in that** end face of the shaft (4) which is arranged on the axial end of the shaft (4).

8. A seal arrangement (1) according to at least one of the preceding claims,
**characterised in that**
the shaft (4) is a hollow shaft and the connection flange (14) has an annular groove, the ring axis of which is oriented coaxially to the axis of the shaft (4),
wherein an axial end region of the shaft (4) and/or of the bearing bush (13) projects or project at least in part into the annular groove.

9. A seal arrangement (1) according to at least one of the preceding claims,
**characterised in that**
the seal arrangement (1) is accommodated in the housing of the gear mechanism (30).

10. A gear mechanism with a seal arrangement (1) according to at least one of the preceding claims,
**characterised in that**
the shaft (4) is the output shaft (4) of the gear mechanism.

## Revendications

1. Dispositif d'étanchement (1) dédié à une transmission,
une bague d'espacement (8) étant interposée entre des première et seconde bagues (7, 10) d'étanchement d'un arbre,
une partie de bridage (9) étant reliée à une bride de rattachement (14),
ladite bride de rattachement (14) exerçant une pression sur la seconde bague (10) d'étanchement d'arbre, vers ladite bague d'espacement (8),
laquelle bague d'espacement (8) exerce une pression sur la première bague (7) d'étanchement d'arbre, de façon telle que ladite première bague (7) d'étanchement d'arbre soit plaquée contre ladite partie de bridage (9),
sachant que la surface de roulement de ladite première bague (7) d'étanchement d'arbre, et la surface de roulement de ladite seconde bague (10) d'étanchement d'arbre, sont situées sur un coussinet de roulement (13) relié à un arbre (4) par vissage, ladite bride de rattachement (14) étant rapportée par vissage, sur ladite partie de bridage (9), de telle manière que lesdites première et seconde bagues (7, 10) d'étanchement de l'arbre se trouvent entre ladite bride de rattachement (14) et ladite partie de bridage (9), avec interposition de la bague d'espacement (8) entre lesdites première et seconde bagues (7, 10) d'étanchement de l'arbre,
**caractérisé par le fait que**
la zone d'espace (17) délimitée par la partie de bridage (9), par la bride de rattachement (14), par la seconde bague (10) d'étanchement de l'arbre, ainsi que par le coussinet de roulement (13) et/ou par ledit arbre (4), est sollicitée par de l'air comprimé,
l'amenée d'air comprimé étant effectuée par l'intermédiaire de ladite bride de rattachement (14),
ladite partie de bridage (9) étant reliée à une partie de recouvrement (5) de la transmission,
sachant que les têtes des vis, utilisées pour la liaison, sont recouvertes et/ou masquées par ladite bride de rattachement (14),
sachant qu'un dispositif (1) d'étanchement en cascade, placé entre l'arbre (4) et ladite partie de recouvrement (5), assure l'étanchéité dudit arbre (4) contre le carter et assure ainsi l'étanchéité, vis-à-vis de l'espace extérieur environnant, de l'espace interne de la transmission partiellement ou intégralement empli d'huile,
ledit dispositif (1) d'étanchement en cascade comprenant un dispositif (1) à bagues d'étanchement d'arbre, une garniture lamellaire d'étanchement (2) et une garniture d'étanchement (3) à labyrinthe.

2. Dispositif d'étanchement (1) selon la revendication 1,
**caractérisé par le fait que**
la partie de bridage (9) et la bride de rattachement (14) délimitent une rainure annulaire dont la première paroi latérale est en contact avec la première bague (7) d'étanchement de l'arbre, et dont la paroi latérale opposée est en contact avec la seconde bague (10) d'étanchement dudit arbre.

3. Dispositif d'étanchement (1) selon au moins l'une des revendications précédentes,
**caractérisé par le fait que**
la partie de bridage (9), la bride de rattachement (14), la première bague (7) d'étanchement de l'arbre, la bague d'espacement (8), et la seconde bague (10) d'étanchement dudit arbre, sont réalisées sous la forme d'un ensemble unitaire préassemblé.

4. Dispositif d'étanchement (1) selon la revendication 1, 2 ou 3,
**caractérisé par le fait**
**qu'**un élément d'étanchement (6) est interposé entre la partie de bridage (9) et la bride de rattachement (14), en vue d'assurer l'étanchéité de la liaison de ladite partie de bridage (9) avec ladite bride de rattachement (14).

5. Dispositif d'étanchement (1) selon au moins l'une des revendications précédentes,
**caractérisé par le fait que**
l'étendue radiale de la bague d'espacement (8) est moindre que celle(s) des première et/ou seconde (10) bague(s) d'étanchement de l'arbre, laquelle bague d'espacement (8) est située à distance du coussinet de roulement (13) et dudit arbre (4), donnant ainsi naissance à un compartiment (20) à graisse entre lesdites première et seconde (10) bagues d'étanchement dudit arbre.

6. Dispositif d'étanchement (1) selon au moins l'une des revendications précédentes,
**caractérisé par le fait que**

7. Dispositif d'étanchement (1) selon au moins l'une des revendications précédentes,
**caractérisé par le fait que**
le coussinet de roulement (13) est relié à arbre (4) au moyen de vis orientées axialement, lesquelles vis sont vissées dans des perçages taraudés respectifs, prévus dans la face frontale de l'arbre (4) située à l'extrémité axiale dudit arbre (4).

8. Dispositif d'étanchement (1) selon au moins l'une des revendications précédentes,
**caractérisé par le fait que**
l'arbre (4) est un arbre creux, et la bride de rattachement (14) comporte une rainure annulaire dont l'axe de l'anneau est orienté coaxialement à l'axe dudit arbre (4),
sachant qu'une région extrême axiale dudit arbre (4) et/ou dudit coussinet de roulement (13) pénètre, au moins en partie, dans ladite rainure annulaire.

9. Dispositif d'étanchement (1) selon au moins l'une des revendications précédentes,
**caractérisé par le fait que**
ledit dispositif d'étanchement (1) est intégré dans le carter de la transmission (30).

10. Transmission équipée d'un dispositif d'étanchement (1) conforme à au moins l'une des revendications précédentes,
**caractérisée par le fait que**
l'arbre (4) est l'arbre de sortie (4) de ladite transmission.
